# EUROPÄISCHE PATENTSCHRIFT

(11) **EP 0 653 336 B1**
(45) Veröffentlichungstag und Bekanntmachung des Hinweises auf die Patenterteilung: **29.04.1998**
(21) Anmeldenummer: 94117303.1
(22) Anmeldetag: 03.11.1994
(51) Int. Cl.: B60R 21/26, F42B 3/04

(54) **Gasgenerator**
Gas generator
Générateur de gaz

(30) Priorität: 11.11.1993 DE 4338536
(43) Veröffentlichungstag der Anmeldung: 17.05.1995
(73) Patentinhaber: TRW Airbag Systems GmbH & Co. KG, 84544 Aschau am Inn (DE)
(72) Erfinder: Bauer, Hermann, D-83339 Stöttham (DE); Bender, Richard, Dr., D-91207 Lauf (DE); Hawly, Rudolf, D-84478 Waldkraiburg (DE)
(74) Vertreter: Sulzbach, Werner, Dipl.-Chem. Dr.

(56) Entgegenhaltungen:
- EP-A- 0 069 441
- EP-A- 0 403 857
- US-A- 4 158 696
- US-A- 4 858 951

## Beschreibung

Die Erfindung betrifft einen rohrförmigen Gasgenerator mit einem Außengehäuse aus Blech mit Gasauslässen, einem in dem Außengehäuse angeordneten, Festtreibstoff zum Erzeugen eines Gases enthaltenden Brennkammerzylinder mit einer offenen Stirnseite und einer der offenen Stirnseite entgegengesetzten, einen zentralen Anzünder aufweisenden Stirnseite, wobei der Brennkammerzylinder in einem Teilbereich seines Umfangs angeordnete Öffnungen für den Durchtritt des Gases aufweist, einem die offene Stirnseite des Brennkammerzylinders verschließenden Deckel, einem auf der entgegengesetzten Stirnseite am Umfang des Außengehäuses gebildeten Halte- und Zentrierring zur Befestigung des Gasgenerators an einer Struktur in einem Fahrzeug, einem zwischen dem Festtreibstoff und den Öffnungen eingesetzten ersten Filter, und einem zweiten rohrförmigen, den Brennkammerzylinder umgebenden Filter, der zwischen dem Deckel und einem an der anderen Stirnseite des Brennkammerzylinders gebildeten Anschlag gehalten ist.

Ein derartiger Gasgenerator ist beispielsweise aus der EP-A-0 069 441 bzw. der entsprechenden US-A-4,380,346 bekannt.

Die US-A-4,158,696 beschreibt darüber hinaus einen rohrförmigen Gasgenerator, der aus einem einseitig verschlossenen Brennkammerzylinder und einem diesen umschließenden Außengehäuse aufgebaut ist. Das offene Ende des Brennkammerzylinders, das den Festtreibstoff aufnimmt, wird mittels eines Deckels veschlossen. An der gegenüberliegenden Stirnseite dieses Brennkammerzylinders ist eine Anzündeinheit vorgesehen. Der in dem Brennkammerzylinder untergebrachte Festtreibstoff wird von einer hermetisch abdichtenden Folie umschlossen, die im Auslösefall von dem erzeugten Treibgas aufgebrochen wird. Dieses Treibgas strömt über im Brennkammerzylinder vorgesehene Öffnungen in den zwischen den Bremmkammerzylinder und den diese umgebenden Außengehäuse gebildeten Filterraum ein, wobei dieser Filterraum in Längsrichtung mittels Zwischenwänden in mehrere Kammern aufgeteilt ist, so daß das aus dem Brennkammerzylinder in eine solche Filterkammer austretende Treibgas nicht direkt aus dem Außengehäuse austreten kann, sondern zunächst in axialer Richtung durch eine daneben liegende Filterkammer geleitet wird, wo es nach Durchtritt durch einen Filter über in dem Außengehäuse vorgesehene Öffnungen aus dem Gasgenerator austreten kann.

Schließlich ist aus der EP-A-0 638 465 ein Brennkammerzylinder zur Verwendung in einem Gasgenerator bekannt, bei dem streifenförmige Filter vor den Austrittsöffnungen dieses Brennkammerzylinders in Längsrichtung verlaufen und mittels einer Clip-Befestigung fixiert werden.

Aufgabe der Erfindung ist es, einen Gasgenerator der eingangs genannten Gattung mit einem kostengünstigen Aufbau anzugeben, der einfach zu montieren ist, ohne daß das Endprodukt qualitativ schlechter wird.

Diese Aufgabe wird erfindungsgemäß durch die Merkmale des Patentanspruchs 1 gelöst. Aus- und Weiterbildungen der Erfindung sind in weiteren Ansprüchen angegeben. Die Erfindung ist nicht auf die Ausführungsbeispiele beschränkt.

Ein Ausführungsbeispiel der Erfindung ist nachfolgend anhand der Zeichnungen erläutert. Es zeigen:
- Fig. 1: den Gasgenerator nach dem Zusammenbau im Längsschnitt,
- Fig. 2: einen Querschnitt durch den Gasgenerator nach Fig. 1 etwa in der Mitte desselben,
- Fig. 3: ein Detail gemäß III in Fig. 2,
- Fig. 4: eine konische Hülse für den Anzünder, wie in Fig. 1 rechts eingebaut, im Detail,
- Fig. 5: das Detail gemäß III in Fig. 2 in perspektivischer Ansicht.

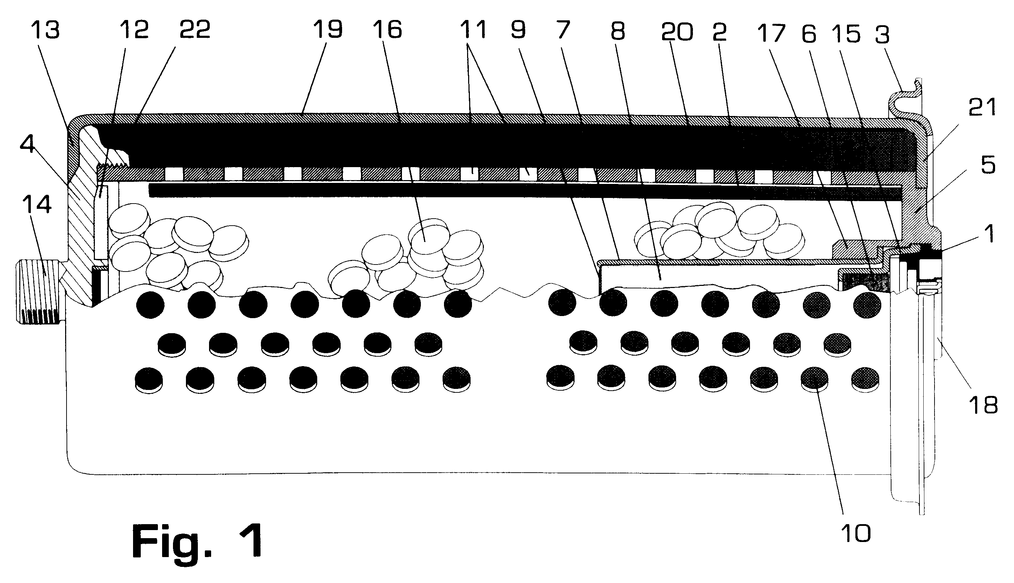

Wie Fig. 1 zeigt, weist der neue Gasgenerator im wesentlichen eine zylindrische Form auf. Zum Erzeugen des Gases dient ein Treibsatz 16, hier dargestellt in Form von Tabletten, aus Festtreibstoff an sich bekannter Art. Dieser Treibsatz wird gezündet von einem elektrischen Anzünder 8, meist aus einer Pulvermischung bestehend und in einer Hülse 7 enthalten. Das erzeugte Gas strömt zunächst durch einen ersten Filter 2, dann durch Öffnungen 11 in einem rohrförmigen Brennkammerzylinder 5, dessen in Fig. 1 rechte Stirnseite einstückig mit dem Zylinder ausgebildet ist und diesen einseitig abschließt, wobei der Zylinder an der Stirnseite angeformt eine Aufnahme 17 für die Einbringung der Hülse 7 des Anzünders 8 enthält.

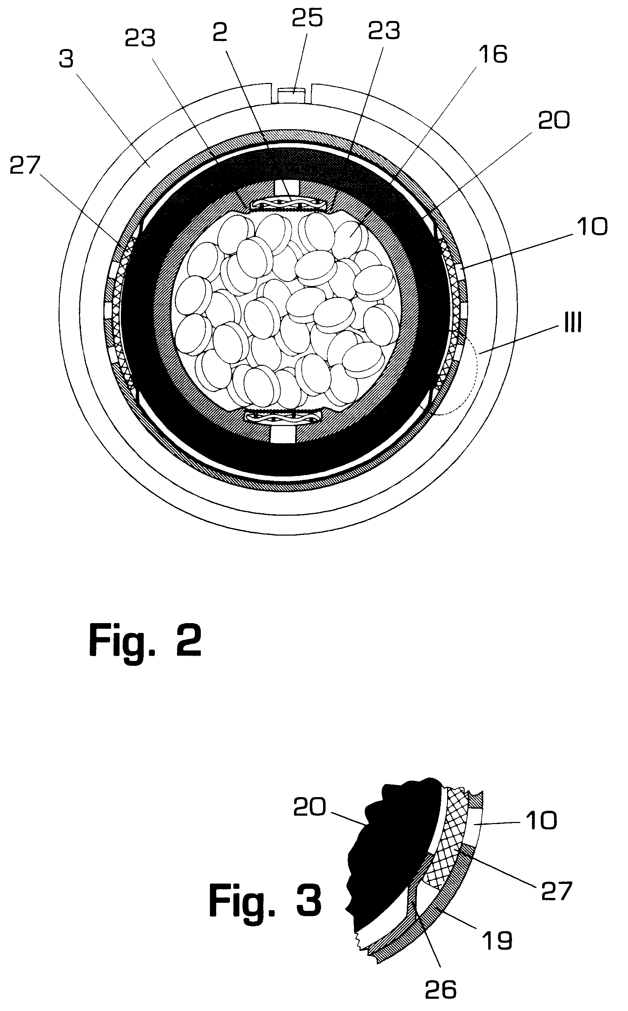

Innen in dem Brennkammerzylinder 5 ist der erste Filter 2, bevorzugt aus Maschendrahtgewebe und/oder Einzeldrähten, wie Fig. 2 zeigt, eingeschoben und an Ansätzen 23 in Längsrichtung geführt und gehaltert.

In radialer Richtung nach außen hin folgt an den Brennkammerzylinder 5 ein zweiter rohrförmiger oder hohlzylindrischer Filter 20, enthalten in einem zylindrischen Blechgehäuse 19, welches den Abschluß nach außen bildet und an einem stirnseitigen Ende einen Halte- und Zentrierring 3 aufweist zur Befestigung des zusammengebauten Gasgenerators an einer Struktur des Fahrzeuges.

An der anderen Stirnseite ist das Gehäuse 19 bei 13 umgebördelt und schließt den Deckel 4 ein. Dieser Deckel 4 endet in einem Schraubgewindebolzen 14 zur Halterung des anderen Endes des Gasgenerators in der Struktur. Am entgegengesetzten stirnseitigen Ende ist in dem Brennkammerzylinder 5 ein Verschlußelement 1 mit elektrischer Kontaktierung, insbesondere einer Steckerkontaktbuchse vorhanden. Der Stecker sorgt für die elektrische Stromzuführung zu einer Zündpille 6, die in einem Ring 15 gefaßt und gehaltert ist. Diese Teile werden zusammen mit der Hülse 7 für den Anzünder 8 in die Aufnahmebuchse 17 des Zylinders 5 in Fig. 1 von rechts Pfeil eingesetzt. Das Gehäuse 19 weist eine Vielzahl von Auslässen 10 zum Airbag hin auf und ist bei 21 ebenfalls umgebördelt und dadurch am Brennkammerzylinder 5 befestigt. Der Deckel 4 besitzt einen Ansatz 22 für den Formschluß zum Filter 20, so daß dieser mit dem Deckel festgelegt ist.

Damit eventuelle Unterschiede im Füllungsgrad des Treibsatzes, hier Tabletten 16, ausgeglichen werden können, ist ein Füllkörper 12 an der Innenseite der Stirnwand des Deckels 4 angeordnet. Dieser Füllkörper hat Ringform und besteht aus einem zusammendrückbaren Kunststoff, z.B. einem Silikonschaum oder PE-Schaum und solcher Schaumstoff ist preiswert aus Matten herausarbeitbar und im Deckel 4 schon vormontiert gehaltert, bevor dieser mit den übrigen Teilen, wie in Fig. 1 gezeigt, zusammenmontiert wird und den Gasgenerator abschließt.

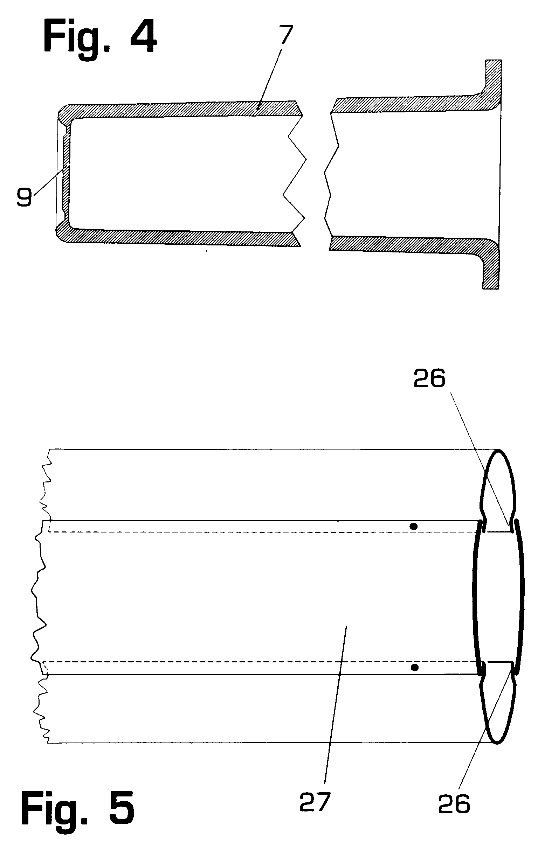

Auch der Halte- und Zentrierring 3 wird auf dem äußeren Blechgehäuse 19 vormontiert und er weist eine Rast- oder Positioniernase oder Sicke 25 auf, welche in Drehrichtung eine Festlegung, wie in Fig. 2 ersichtlich, möglich macht. Am Umfang der Bleche 19 sind zwei oder vier Abkantungen 26 vorhanden, die den Gasstrom in Richtung auf ein Feinfilter (Drahtgewebe) 27 lenken (Fign. 3, 5).

Die Hülse 7 für den Anzünder 8 ist konisch ausgebildet und so formschlüssig in der geschlossenen Stirnseite des Teils 5 von rechts in Fig. 1 einsetzbar und wird dort durch Keilwirkung gehalten. Die Hülse 7 ist einstückig aus einer Aluminiumlegierung im Kaltfließpreßverfahren hergestellt und in Längsrichtung gesehen im Querschnitt konisch ausgebildet. Ferner weist sie eine integrierte Berstmembran 9 auf, wie besonders deutlich aus Fig. 4 ersichtlich ist.

Die konische Bauweise der Hülse in Kaltfließpreßtechnik ergibt eine einfache Montierbarkeit, und die integrierte Berstmembran an der Stirnseite der Hülse 7 ergibt eine gerichtete Anzündung.

Dadurch, daß ein zylinderförmiges Filtergewebe 20 als Filterpaket mit dem Brennkammerzylinder kombiniert ist, erlaubt dies die vollständige externe Vormontage des Zylinders und es ist ferner möglich, den Gasstrom definiert am Feinfilter 27 entlang zu leiten mit Hilfe der Überströmöffnungen gemäß Fig. 3, um so eine Beipasströmung zu vermeiden. Dadurch wird ein unkontrollierter Schlackenaustritt unterbunden und zudem eine sichere Montage gewährleistet.

Der Zusammenbau des neuen Gasgenerators ist auch dadurch vereinfacht, daß ein Zentrierring 3 bereits vormontiert in positionierter Lage zu den Filterabströmöffnungen 10 auf dem Gehäuse herstellbar ist. Der Zentrierring 3 wird bevorzugt aus einer Blechronde, in der Regel aus rostfreiem Stahl tiefgezogen und anschließend mit dem Blechgehäuse 19 verbunden. Diese Zentrierung dient zugleich der Abdichtung gegenüber Gasaustritt während der Gaserzeugung durch Abbrand des Festtreibstoffes in Form der Tabletten 16.

## Patentansprüche

1. Rohrförmiger Gasgenerator mit
a) einem Außengehäuse (19) aus Blech mit Gasauslässen (10),
b) einem in dem Außengehäuse (19) angeordneten, Festtreibstoff (16) zum Erzeugen eines Gases enthaltenden Brennkammerzylinder (5) mit einer offenen Stirnseite und einer der offenen Stirnseite entgegengesetzten, einen zentralen Anzünder (6, 7, 8) aufweisenden Stirnseite, wobei der Brennkammerzylinder in einem Teilbereich seines Umfangs angeordnete Öffnungen (11) für den Durchtritt des Gases aufweist,
c) einem die offene Stirnseite des Brennkammerzylinders (5) verschließenden Deckel (4),
d) einem auf der entgegengesetzten Stirnseite am Umfang des Außengehäuses (19) gebildeten Halte- und Zentrierring (3) zur Befestigung des Gasgenerators an einer Struktur in einem Fahrzeug,
e) einem zwischen dem Festtreibstoff (16) und den Öffnungen (11) eingesetzten ersten Filter (2), und
f) einem zweiten rohrförmigen, den Brennkammerzylinder (5) umgebenden Filter (20), der zwischen dem Deckel und einem an der anderen Stirnseite des Brennkammerzylinders (5) gebildeten Anschlag (21) gehalten ist,
**dadurch gekennzeichnet**, daß
der Gasgenerator ferner ein innen an dem Gehäuse anliegendes rohrförmiges Teil zur Fixierung des zweiten Filters (20) aufweist, wobei an dem rohrförmigen Teil Abkantungen (26) vorhanden sind, die das Gas in Richtung auf einen vor den Gasauslässen (10) angeordneten Feinfilter (27) lenken, daß der erste Filter (2) im wesentlichen streifenförmig ausgebildet ist, und daß der Deckel (4) einen Ansatz (22) für einen Formschluß mit dem zweiten Filter (20) aufweist und der Anschlag (21) durch eine Umbördelung des Außengehäuses (19) gebildet ist.

2. Gasgenerator nach Anspruch 1, dadurch gekennzeichnet däß der Halte- und Zentrierring (3) eine Positioniernase (25) aufweist.

3. Gasgenerator nach Anspruch 1 oder 2, dadurch gekennzeichnet, daß der Feinfilter (27) ein Drahtgewebe ist.

4. Gasgenerator nach einem der vorhergehenden Ansprüche, dadurch gekennzeichnet, daß der erste Filter an Ansätzen (23) im Brennkammerzylinder gehaltert und in Längsrichtung geführt ist.

5. Gasgenerator nach einem der vorhergehenden Ansprüche, dadurch gekennzeichnet, daß der Brennkammerzylinder (5) und die den Anzünder (6, 7, 8) aufweisende Stirnseite einstückig ausgebildet sind.

## Claims

1. A tubular gas generator, comprising
a) an outer housing (19) of sheet metal, with gas exit ports (10),
b) a combustion chamber cylinder (5) arranged in the outer housing (19) and containing solid propellant (16) for generating a gas, the combustion chamber cylinder (5) comprising an open end face and opposite thereto an end face having a central igniter (6, 7, 8), and comprising openings (11) in a partial area of its periphery for the passage of the gas,
c) a cover (4) closing off the open end face of the combustion chamber cylinder (5),
d) a holding and centering ring (3) formed at the opposite end face on the periphery of the outer housing (19), for securing the gas generator to a structure in a vehicle,
e) a first filter (2) inserted between the solid propellant (16) and the openings (11), and
f) a second, tubular filter (20) which surrounds the combustion chamber cylinder (5) and which is retained between the cover and a stop (21) formed on the other end face of the combustion chamber cylinder (5),
**characterized in that**
the gas generator further comprises a tubular element which abuts against the inside of the housing for securing the second filter (20), the tubular element having bent portions (26) which direct the gas towards a fine filter (27) arranged upstream of the gas exit ports (10), that the first filter (2) is essentially stripe-shaped, and that the cover (4) comprises a shoulder (22) for an interlocking fit with the second filter (20), and the stop (21) is formed by flanging the outer housing (19).

2. The gas generator according to claim 1, characterized in that the holding and centering ring comprises a positioning nose (25).

3. The gas generator according to claim 1 or 2, characterized in that the fine filter (27) is a wire fabric.

4. The gas generator according to any of the preceding claims, characterized in that the first filter is supported by shoulders (23) in the combustion chamber cylinder and is guided in the longitudinal direction.

5. The gas generator according to any of the preceding claims, characterized in that the combustion chamber cylinder (5) and the end face comprising the igniter (6, 7, 8) are integrally formed with each other.

## Revendications

1. Générateur de gaz de forme tubulaire avec
a) un carter extérieur (19) en tôle avec des sorties (10) pour le gaz,
b) un cylindre de chambre de combustion (5), qui est disposé dans le carter extérieur (19) et qui contient un combustible solide (16), qui sert à produire un gaz, avec un côté frontal ouvert et avec un côté frontal, qui est opposé au côté frontal ouvert et qui présente un allumeur central (6, 7, 8), le cylindre de chambre de combustion présentant des ouvertures (11) disposées dans une zone partielle de son pourtour pour le passage du gaz,
c) un couvercle (4) qui ferme le côté frontal ouvert du cylindre de chambre de combustion (5).
d) une bague de maintien et de centrage (3), formée sur le côté frontal opposé sur le pourtour du carter extérieur (19), qui sert à fixer le générateur de gaz sur une structure dans un véhicule,
e) un premier filtre (2), qui est inséré entre le combustible solide (16) et les ouvertures (11), et
f) un deuxième filtre (20), en forme de tube, qui entoure le cylindre de chambre de combustion (5) et qui est maintenu entre le couvercle et une butée (21) formée sur l'autre côté frontal du cylindre de chambre de combustion (5),
caractérisé en ce que
le générateur de gaz présente en outre une pièce de forme tubulaire, qui repose à l'intérieur sur le boîtier et qui sert à fixer le deuxième filtre (20), des plis (26) existant sur la partie en forme de tube, qui dévient le gaz en direction d'un filtre fin (27), disposé avant les sorties pour le gaz (10), en ce que le premier filtre (2) est essentiellement constitué en forme de ruban, et en ce que le couvercle (4) présente un appendice (22) pour une coopération de forme avec le deuxième filtre (20) et la butée (21) est formée par un rabattement du carter extérieur (19).

2. Générateur de gaz selon la revendication 1, caractérisé en ce que la bague de maintien et de centrage (3) présente un nez de positionnement (25).

3. Générateur de gaz selon la revendication 1 ou 2, caractérisé en ce que le filtre fin (27) est un tissu métallique.

4. Générateur de gaz selon l'une des revendications précédentes, caractérisé en ce que le premier filtre s'appuie sur des appendices (23), dans le cylindre de la chambre de combustion et est guidé par eux dans le sens longitudinal.

5. Générateur de gaz selon l'une des revendications précédentes, caractérisé en ce que le cylindre de chambre de combustion (5) et le côté frontal, qui comporte l'allumeur (6, 7, 8), sont constitués d'une seule pièce.
